# EUROPEAN PATENT APPLICATION

(11) **EP 2 181 910 A2**
(43) Date of publication of application: **05.05.2010**
(21) Application number: 09164086.2
(22) Date of filing: 30.06.2009
(51) Int. Cl.: B62D 21/04, B62D 21/14, B62D 21/20, B62D 29/00, B62D 33/02, B60P 3/41

(54) **Light weight beam and trailer**

(30) Priority: 30.10.2008 US 261210
(71) Applicant: General Electric Company, Schenectady, NY 12345 (US)
(72) Inventor: Kootstra, Dirk-Jan, GLD 7361 CV, Beekbergen (NL)
(74) Representative: Illingworth-Law, William Illingworth

(57) **Abstract**

A light weight trailer (110) for carrying elongated goods, especially for carrying at least two rotor blades of a wind energy system, having a front support frame (120); a rear support frame (130), with said front support frame (120) and said rear support frame (130) being adapted for supporting an elongated good; and a beam (150) connecting said front support frame (120) with said rear support frame (130), wherein said beam (150) consists substantially of a light weight material. Further, a telescopic beam for a light weight trailer for carrying elongated goods and a method of constructing a light weight trailer are provided.

## Description

### BACKGROUND OF THE INVENTION

The present invention relates to a light weight trailer, a telescopic beam and a method of constructing a light weight trailer.

It is known that rotor blades for wind energy systems are transferred to construction sites of the wind energy systems on a regular basis using trailers. During manufacturing of the rotor blades certain ambient conditions are necessary. Therefore, the rotor blades are usually manufactured remotely of the construction sites, where the wind energy systems are to be set up. Hence a transfer of complete rotor blades is made necessary.

During transportation of the rotor blades trucks and trailers are used. The trailers have to be arranged to accommodate a complete rotor blade, such that the trailers have to be long enough for supporting a complete blade. This makes the trailers heavy. In view of traffic regulations, which have to be observed, the payload of such trailers is only good enough for picking up a single rotor blade of a modem wind energy system. Therefore the payload of a trailer for an elongated good such as a rotor blade has to be enhanced.

### BRIEF DESCRIPTION OF THE INVENTION

In view of the above, a light weight trailer is provided for carrying elongated goods, especially for carrying at least one or two rotor blades of a wind energy system, including a front support frame and a rear support frame. The front support frame and the rear support frame are adapted for supporting elongated goods. Furthermore, a beam is provided which connects the front support frame with the rear support frame, wherein the beam consists substantially of a light weight material.

According to another aspect, a telescopic beam is provided for a light weight trailer for carrying elongated goods including at least two beam members that can be telescoped into each other. At least one of the two beam members consists substantially of a light weight material.

As used herein, telescopable beam members are understood in that the beam is extendable in order to form a beam of operational length e.g. by extracting a beam member out of the other. Further, the beam can be retracted to a shorter overall length e.g. when the beam is not used by inserting a part of the beam members into the others or by folding the beam.

According to another aspect, a method of constructing a light weight trailer for carrying elongated goods is provided, wherein the method comprises providing a front support frame; providing a rear support frame; manufacturing a beam consisting substantially of light weight material for connecting the front support frame with the rear support frame; and mounting the beam between the front support frame and the rear support frame.

According to a further aspect of the invention, a method of using a light weight trailer for carrying elongated goods, especially for carrying at least two rotor blades of a wind energy system, is provided. The light weight trailer typically includes a front support frame and a rear support frame. The front support frame and the rear support frame are adapted for supporting the elongated good. Furthermore, a beam is provided which connects the front support frame with the rear support frame, wherein the beam consists substantially of a light weight material.

Further aspects, advantages and features of the present invention are apparent from the dependent claims, the description and the accompanying drawings.

### BRIEF DESCRIPTION OF THE DRAWINGS

A full and enabling disclosure of the present invention, including the best mode thereof, to one of ordinary skill in the art, is set forth more particularly in the remainder of the specification, including reference to the accompanying figures wherein:
Fig. 1 is a schematic longitudinal-sectional view of an embodiment of of a tractor with a light weight trailer according to embodiments described herein.
Fig. 2 is a schematic longitudinal-sectional view of an embodiment of a light weight trailer according to embodiments described herein.
Fig. 3 is a schematic longitudinal-sectional view of an embodiment of a beam of a light weight trailer according to embodiments described herein.
Fig. 4 shows a schematic cross-sectional view of an embodiment of a beam for a light weight trailer.
Fig. 5 is a schematic longitudinal-sectional view of a telescoping device and a fixing device of an embodiment of a beam for a light weight trailer
Fig. 6 is a schematic cross-sectional view of a wind energy system with rotor blades, wherein two of the rotor blades can be transported using the embodiment shown in Fig. 1.

### DETAILED DESCRIPTION OF THE INVENTION

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

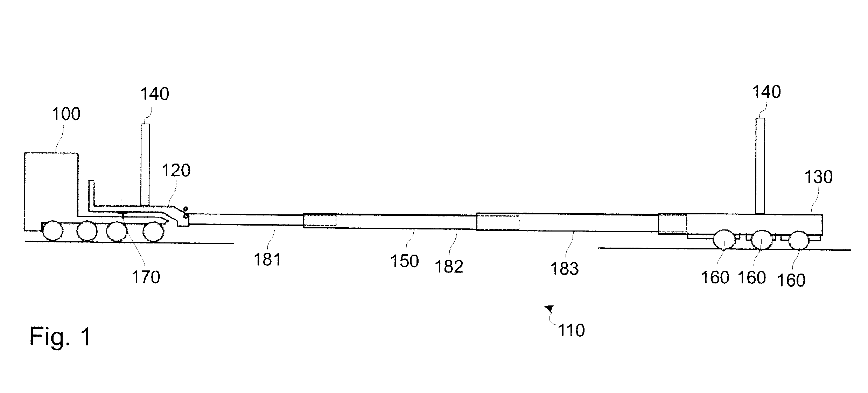

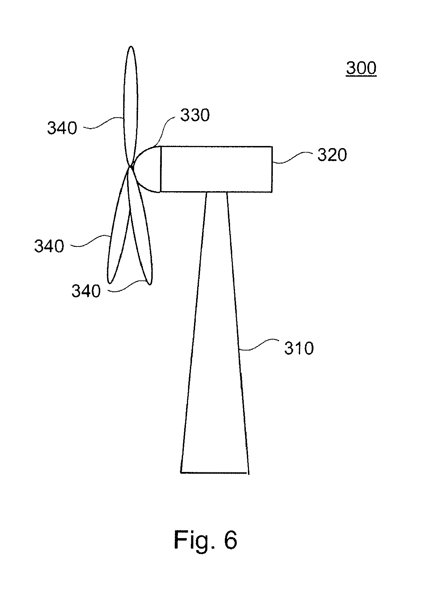

Fig. 1 is a schematic drawing of a tractor 100 with a light weight trailer 110. The light weight trailer 110 comprises typically a front support frame 120 and a rear support frame 130. On the front support frame 120 and the rear support frame 130 mounts 140 can be fixed, respectively. The mounts 140 are arranged for receiving two rotor blades of a wind energy system (rf. Fig. 6), such that two rotor blades can be transferred using the truck and trailer combination of Fig. 1. During transport, the two rotor blades are fixed in alignment with the longitudinal axis of the trailer 110.

As described herein, the term "rotor blade" in the context of transporting the rotor blades is used as an example for elongated goods. Typical lengths of the elongated goods are at least 10 m, more typically at least 20 m, even more typically at least 25 m. In typical embodiments, the elongated goods are a complete rotor blade or part of a rotor blade of a wind energy system. Those rotor blades of modem wind energy systems that cannot be transported as a whole may therefore be transported split up in two or three parts.

In typical embodiments, mounts for two rotor blades are fixed on the support frames. Other typical embodiments have mounts arranged for receiving more than two rotor blades. The maximum number of rotor blades which can be transported using embodiments described herein depends primarily on the weight and the dimension of the rotor blades since traffic regulations, especially regulations regarding the maximum gross vehicle weight have to be kept. The light weight trailer described herein may be suitable for transporting two, three or even four rotor blades.

The light weight trailer of Fig. 1 comprises a beam 150 connecting the front support frame 120 with the rear support frame 130. In the embodiment of Fig. 1, the trailer 110 is a semitrailer-type trailer, wherein the rear support frame 130 serves as a chassis receiving three axles 160. The front support frame 120 includes a coupling member 170 for coupling the trailer 110 with the tractor 100.

In typical embodiments semitrailer-type trailers are provided due to the ability of semitrailers to receive elongated goods. In other typical embodiments, two-pole-type trailers are used. Two-pole-trailers are trailers with two chassis connected by the beam. The front chassis is coupled to the tractor. In typical embodiments at least one of the axles of the trailer is a steering axle providing better maneuvering abilities for the tractor-trailer-combination.

The beam 150 consists substantially of light weight material. In the embodiment shown in Fig. 1, the beam 150 consists substantially of aluminum. The beam 150 comprises extruded aluminum profiles manufactured using known techniques.

Typically, the use of light weight material for the beam allows for transporting of at least two rotor blades of a wind energy system reducing transportation costs. In typical embodiments alloyed aluminum is used as light weight material, such that the beam consists substantially of alloyed aluminum. Alloys may be used to improve mechanical, corrosion or welding properties. Several aluminum alloys like 6061-alloys or 7075-alloys can be used in typical embodiments described herein. Alloys for alloying aluminum for typical embodiments include copper, zinc, manganese, silicon, or magnesium. Aluminium alloys are easy to manufacture. Aluminium alloys show good corrosion and durability properties. With a beam of aluminium, a trailer weighing less than trailers in the art can be provided.

In typical embodiments having aluminium beams, the aluminium beam or the aluminium beam members are extruded. In other typical embodiments, aluminium plates are welded to form a beam or a beam member. Aluminium alloys used in typical embodiments are widely used and inexpensive.

In further typical embodiments, composite material is used as light weight material for the beam, such that the beam consists substantially of composite material. Several composite materials can be used, like single cure composites or dual cure composites. Examples of dual cure composites used in typical embodiments are described in the European patent application EP 1 764 382 A1, assigned to the same assignee, which is incorporated herein by reference. In typical embodiments, composite materials comprise glass fibers and carbon fibers embedded in a matrix. Typically, the matrix is fiber reinforced. In typical embodiments, the carbon fibers are orientated substantially parallel to the longitudinal axis of the beam. This provides a maximum stiffness with respect to bending load. Composites used in typical embodiments are also described in the European patent application EP 1 798 412 A2, assigned to the same assignee, which is incorporated herein by reference. In further embodiments multilayer composite materials are used. Such multilayer materials are described in the United States Patent US 7,153,576 B2, assigned to the same assignee, which is incorporated by reference. Reference is made to the chemicals and the methods of manufacture described in the above-named European patent applications and the United States Patent. Typically, the beam comprising composite material is manufactured by laminating layers of fiber material. Typically glass fibers and carbon fibers are used, wherein the matrix comprises typically resin, such as epoxy resin. Composites are very light, such that the beam of composite material is very light and the trailer comprising such a beam has a maximum payload. Furthermore, composite materials provide high stiffness. Hence, deflection of the beam comprising composite material as the primary or the supporting material is kept low.

The term "consists substantially of light weight material" as used herein embraces all constructions consisting substantially of aluminum, composite material or another light weight material, respectively. Typically, the beam comprises fixations for fixing the beam at the support frames. Theses fixations are part of the beam but can be of a different material as compared to the main part of the beam, such that most of the beam is made of light weight material except some special parts. Typically, the term "consists substantially of light weight material" as used herein means that the mass percentage of light weight material of the beam compared to the overall weight of the beam amounts to at least 75%, more typically 80%, even more typically 90% or even 95%. This applies similarly for the terms "consists substantially of aluminum" and "consists substantially of composite material". Typical light weight materials used in embodiments described herein are aluminum and composite materials like glass-carbon-composites, glass-steel-composites and glass composites. In further typical embodiments combinations of composite materials with aluminum materials are used.

In the embodiment shown in Fig. 1, the beam 150 is extendable. The beam 150 is a telescopic beam, which comprises three telescopic beam members 181, 182, 183. The telescopic beam members 181, 182, 183 are hollow, wherein a smaller beam member can be moved at least partially into a bigger beam member. The beam member 183, which is the biggest one of the beam members 181, 182, 183, may be moveable into the rear support frame 130 thereby entering the rear support frame partly or completely. Hence, the rear support frame 130 can act as a fourth hollow beam member of the telescopic beam. Due to the telescopic beam 150, the trailer 110 can be converted in a retracted position (not shown), such that the gross length of the trailer can be reduced remarkably.

Typically, the beam is extendable. In typical embodiments described herein, the beam is a telescopic beam comprising at least two telescopable beam members. Also three, four or even more telescopable beam members are comprised in typical embodiments described herein. Typically, the beam comprises a fixing device for fixing the beam in a retracted position or an extended position. In further embodiments, the extendable beam is foldable, such that it can be transformed into a folded position. In use, the foldable beam is extended and used to connect the rear support frame and the front support frame.

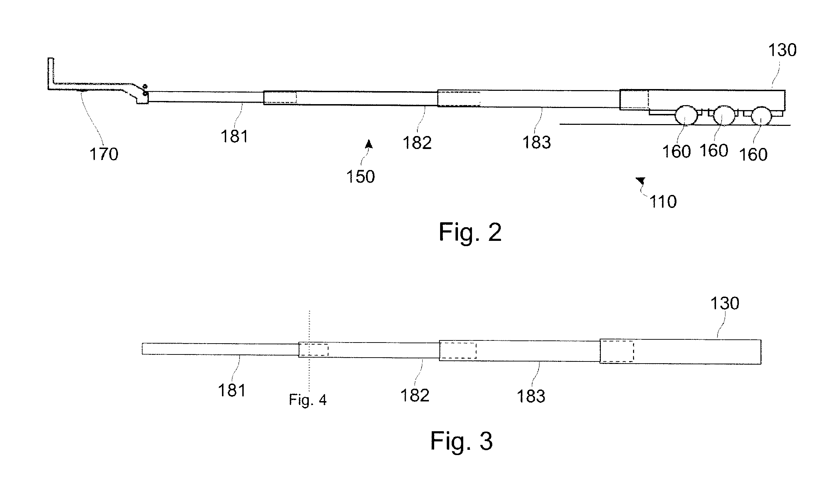

Fig. 2 is a schematic drawing of a light weight trailer according to embodiments described herein. With respect to Fig. 2, same reference numbers are used for same or equal parts compared to Fig. 1 and the description of Fig. 1. However, the beam 150 of the embodiment shown in Fig. 2 consists substantially of composite material. The composite material is a glass fiber and carbon fiber material, wherein the fibers are embedded in a matrix material.

Fig. 3 is a schematic drawing of a beam of a light weight trailer according to embodiments described herein. With respect to Fig. 3, same reference numbers are used for same or equal parts compared to Fig. 1 and the description of Fig. 1. The beam as described herein may be used for equipping a trailer with. Accordingly, trailers known in the art having beams of a high weight may be re-equipped with the beam as described herein.

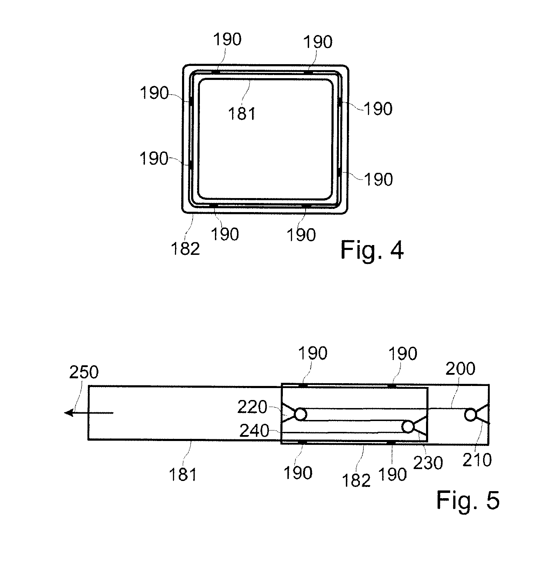

Fig. 4 shows a schematic cross-sectional view of the beam of Fig. 3 along the indicated dotted line in Fig. 3. Again, same reference numbers are used for same or equal parts as in conjunction with Figs. 1 and 3. The beam members 181 and 182, of which a section is shown in Fig. 4, are extruded aluminum profiles arranged to be telescopable. Therefore, the section of the beam member 181 is slightly smaller than the section of the beam member 182. The beam member 181 can be pushed or pulled or otherwise moved into the beam member 182. For a low-friction movement of the beam member 181 in the beam member 182, bearings 190 may be provided between the beam member 181 and the beam member 182.

Typically, bearings are provided between two telescopable beam members. The bearings are usually PTFE bearings. In other typical embodiments, roller bearings are used to ease the movement of one of the beam members in another one of the beam members.

With reference to Figs. 1 to 4, as explicit example, the beam member 181 may have a height of 416 mm and a width of 300 mm. The beam member 182 may have a height of 456 mm and a width of 350 mm. Finally, the beam member 183 may have a height of 506 mm and a width of 400 mm. The beam members may have a length of about 12 m, respectively. The minimum overlap of two beam members may be 1500 mm to ensure a reliable transmission of forces between the beam members. The thickness of the flanges of the hollow beam members may be reduced with the increasing width of the beam members 181, 182 and 183: 20 mm (beam member 181), 15 mm (beam member 182) and 12 mm (beam member 183). The web thickness may be kept constant at 8 mm to prevent buckling of the web. The beam members may have a mass per unit length of roughly between 80 kg/m and 100 kg/m, depending which one of the beam members 181, 182 or 183 is regarded. The mass per unit length of the whole beam may be about 90 kg/m for aluminium as the light weight material.

Typical embodiments use beam members having a minimum height of at least 300 mm. Hence, the beam has a minimum height of 300 mm. In further typical embodiments beams having heights of more than 400 mm, 500 mm, 600 mm or even more than 700 mm are used. Bigger heights provide better stiffness of the beam, such that the deflection in the middle of the beam can be restricted. Also the thicknesses of the flanges and the webs of the beam members can be reduced using beam members with bigger heights. However, possible buckling puts a boundary to even smaller webs and flanges, such that no further weight reduction can be achieved. Therefore, typical embodiments use beam members having a height of less than 800 mm, 700 mm or even less than 600 mm. The named measures of the beam members of typical embodiments apply for all light weight materials used in embodiments of the invention, especially for aluminium and composite material beams. Typical embodiments provide an overlap or the telescopable beam members of at least 1200 mm, 1300 mm or even 1400 mm. The overlap of the beam of typical embodiments in the extended situation is less than 1800 mm or less than 2000 mm. The whole beam of typical embodiments has a mass per unit length of less than 150 kg/m or even less than 120 kg/m. Other embodiments have a mass per unit length of less than 100 kg/m for the whole beam. A "mass per unit length of the whole beam" means an average value for the whole beam, wherein some of the beam members can be lighter or heavier. Of course, in overlapping sections of the telescopable beam members, the mass per unit length is increased compared to sections with a single beam member.

Fig. 5 shows a detail of the embodiment of Fig. 3 schematically. The beam members 181 and 182 are telescopable by using a telescopic device. The telescopic device is a rope-type device which is usable to push the beam member 181 such that the beam members 181 and 182 are pulled apart. For this reason, a rope 200 is drawn over a rope winch 210 arranged inside of the beam member 182 and fixed to the beam member 182. The rope winch 210 can be used to move in the rope 200. The rope 200 is further drawn over a rope pulley 220, which is also fixed to the beam member 182.

Furthermore, a rope pulley 230 fixed to the beam member 182 and an end fixation 240 for the rope at the beam member 181 provide a tackle-type device, such that a moving in of the rope using the rope winch 210 causes a movement of the beam member 181 in the direction of an arrow 250. The movement in the direction of the arrow 250 leads to an extraction of the telescopable beam members 181 and 182.

In typical embodiments, the telescopic beam comprises a telescopic device to retract or expand the beam. Typical telescopic devices are hydraulic devices or rope-type devices. Other known devices are used in further typical embodiments. Also manual telescoping devices are used in typical embodiments. The pulling force of the tractor is used in typical embodiments to expand the telescopic beam. Therefore, the rear chassis is fixed, such that the beam can be expanded or retracted by pulling or pushing the front support frame with the tractor.

Fig. 6 is a schematic view of a wind energy system 300, also referred to as a wind turbine. The wind energy system 300 includes a tower 310 to which a machine nacelle 320 is mounted at its top end. A hub 330 having three rotor blades 340 is mounted thereto. Typical embodiments of the invention allow for a transport of two of the rotor blades 340 with one truck not exceeding a maximum gross weight of 40 metric tons. Hence, traffic regulations regulating the gross weight and applying in many countries all over the world are not violated by such a truck transporting two rotor blades.

This written description uses examples to disclose the invention, including the best mode, and also to enable any person skilled in the art to make and use the invention. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Aspects and of the present invention are defined in the following numbered clauses:
1. A light weight trailer for carrying elongated goods having
   - a front support frame;
   - a rear support frame, with said front support frame and said rear support frame being adapted for supporting an elongated good; and
   - a beam connecting said front support frame with said rear support frame, wherein
   said beam consists substantially of a light weight material.
2. The light weight trailer according to clause 1 wherein said light weight trailer is a semitrailer-type trailer.
3. The light weight trailer according to clause 1 or clause 2 wherein said light weight material comprises aluminum.
4. The light weight trailer according to any one of the preceding clauses, wherein said light weight material comprises a composite material.
5. The light weight trailer according to clause 4 wherein said composite material comprises glass fibers in a matrix material.
6. The light weight trailer according to clause 4 or clause 5 wherein said composite material comprises carbon fibers embedded in a matrix material.
7. The light weight trailer according to any one of the preceding clauses, wherein said beam is extendable.
8. The light weight trailer according to any one of the preceding clauses, wherein said beam is a telescopic beam.
9. The light weight trailer according to clause 8 wherein said telescopic beam comprises at least two telescopable beam members.
10. The light weight trailer according to clause 8 or clause 9 wherein said telescopic beam comprises a telescoping device.
11. The light weight trailer according to any one of the preceding clauses, with said beam having a minimum height of at least 300mm.
12. The light weight trailer according to any one of the preceding clauses, with said beam having a minimum width of at least 200mm.
13. The light weight trailer according to any one of the preceding clauses, with said beam having a mass per unit length of less than 120 kg/m.
14. A telescopic beam for a light weight trailer for carrying an elongated good having at least two telescopable beam members, wherein at least one of said at least two beam members consists substantially of a light weight material.
15. The telescopic beam according to clause 14 wherein said light weight material comprises aluminum.
16. The telescopic beam according to clause 14 wherein said light weight material comprises a composite material.
17. A method of constructing a light weight trailer for carrying elongated goods, said method comprising
   - providing a front support frame;
   - providing a rear support frame;
   - manufacturing a beam consisting substantially of light weight material for connecting said front support frame with said rear support frame; and
   - mounting said beam between said front support frame and said rear support frame.
18. The method according to clause 17, wherein said beam is manufactured by preparing at least two telescopable beam members and telescoping said beam members.
19. The method according to clause 18, wherein said preparing of said beam members comprises extruding a hollow aluminum beam body.
20. The method according to clause 18, wherein said preparing of said beam members comprises preparing of a hollow beam member consisting of composite material.

## Claims

1. A light weight trailer (110) for carrying elongated goods having
a front support frame (120);
a rear support frame (130), with said front support frame (120) and said rear support frame (130) being adapted for supporting an elongated good; and
a beam (150) connecting said front support frame (120) with said rear support frame (130), wherein
said beam (150) consists substantially of a light weight material.

2. The light weight trailer (110) according to claim 1 wherein said light weight material comprises aluminum or a composite material.

3. The light weight trailer (110) according to claim 2 wherein said composite material comprises glass fibers in a matrix material.

4. The light weight trailer (110) according to claim 2 or claim 3, wherein said composite material comprises carbon fibers embedded in a matrix material.

5. The light weight trailer (110) according to any one of the preceding claims wherein said beam (150) is extendable.

6. The light weight trailer (110) according to any one of the preceding claims claim 1 wherein said beam (150) is a telescopic beam.

7. The light weight trailer (11) according to claim 6 wherein said telescopic beam comprises at least two telescopable beam members.

8. The light weight trailer according to claim 6 or claim 7, wherein said telescopic beam comprises a telescoping device.

9. The light weight trailer (110) according to any one of the preceding claims, with said beam (150) having a mass per unit length of less than 120 kg/m.

10. A telescopic beam (150) for a light weight trailer for carrying an elongated good having at least two telescopable beam members (181, 182, 183), wherein at least one of said at least two beam members (181, 182, 183) consists substantially of a light weight material.

11. The telescopic beam (150) according to claim 10 wherein said light weight material comprises aluminum or a composite material.

12. A method of constructing a light weight trailer (110) for carrying elongated goods, said method comprising
providing a front support frame (120);
providing a rear support frame (130);
manufacturing a beam (150) consisting substantially of light weight material for connecting said front support frame (120) with said rear support frame (130); and
mounting said beam (150) between said front support frame (120) and said rear support frame (130).

13. The method according to claim 12, wherein said beam is manufactured by preparing at least two telescopable beam members and telescoping said beam members.

14. The method according to claim 13, wherein said preparing of said beam members comprises extruding a hollow aluminum beam body.

15. The method according to claim 13, wherein said preparing of said beam members comprises preparing of a hollow beam member consisting of composite material.
